# EUROPEAN PATENT SPECIFICATION

(11) **EP 0 602 705 B1**
(45) Date of publication and mention of the grant of the patent: **28.05.1997**
(21) Application number: 93203379.8
(22) Date of filing: 02.12.1993
(51) Int. Cl.: F16H 61/18, F16H 61/22, B60K 20/02

(54) **Automatic transmission**
Automatisches Getriebe
Transmission automatique

(30) Priority: 17.12.1992 GB 9226352
(43) Date of publication of application: 22.06.1994
(73) Proprietor: Delphi France Automotive Systems, 92257 La Garenne-Colombes (FR)
(72) Inventor: Bromhorst, Albert, F-67310 Romanswiller (FR)
(74) Representative: Denton, Michael John

(56) References cited:
- EP-A- 0 260 007
- EP-A- 0 396 034
- GB-A- 2 228 773
- US-A- 5 063 817
- US-A- 5 078 020

## Description

The present invention relates to an automatic transmission, and in particular to a means of preventing an automatic transmission being moved into a park or reverse drive mode whilst the motor vehicle is travelling in a forward direction above a predetermined speed.

As is well known, an automatic transmission includes a selector lever which is movable by a vehicle operator to select the required drive for a vehicle. The usual selectable drive ranges, in order, comprise park (P), reverse drive (R), neutral (N), and one or more forward drive (D), (1), (2) modes. Selection of the reverse drive or park mode by the vehicle operator whilst the vehicle is travelling in a forward direction, above a predetermined speed, can result in severe damage to the automatic transmission. Several solutions to this problem have been proposed. For example, in US patent no. 5,074,168 the solution is to add a solenoid operated reverse inhibit valve to the hydraulic controls of the automatic transmission. This solution requires considerable modifications to be made to the hydraulic circuit of the automatic transmission, and only operates if reverse drive mode is selected. A further solution is proposed in US patent no. 5,063,817. In this case, the selector linkage outside the automatic transmission is modified to include a blocking member, and a solenoid actuated pin, also externally mounted, interacts with the blocking member to prevent selection of the reverse drive or park mode. This solution is only usable on automatic transmission having an external shift linkage, requires modifications to be made to the selector linkage, leaves the solenoid actuated pin susceptible to damage from water, dirt, etc., and, in the case of failure of the electronic controller the selector lever would be left stuck in Park or Reverse.

It is an object of the present invention to overcome the above mentioned problems.

An automatic transmission in accordance with the present invention is characterised over US-A-5063817 by the features specified in the characterising portion of claim 1.

Preferably, the solenoid actuated blocking means is moved between the retracted and the extended positions by a solenoid actuator comprising an energisable coil, energisation of which is controlled by a pressure responsive switch which is actuable dependent on the vehicle speed. Alternatively, the solenoid actuated blocking means may be moved between the retracted and the extended positions by a solenoid actuator comprising an energisable coil, energisation of which is controlled by an electronic control module dependent on the vehicle speed. In either case, the blocking means is preferably in the form of a pin.

The predetermined level is preferably 5 kph.

The present invention has the advantages over the above mentioned prior art of being fittable to any known automatic transmission with little or no modifications being required to the working parts of the automatic transmission. Further, the solenoid actuated blocking means is positioned inside the transmission casing, thereby protecting it from the environment. The present invention also provides an arrangement which is simple, cheap, and easy to install. Also, the present invention can be used on automatic transmissions having internal or external selector linkages, and electrical failure of the solenoid actuated blocking means leaves the blocking means retracted so the selector lever can still be freely moved.

The present invention will now be described, by way of example, with reference to the accompanying drawings, in which:-
Figure 1 is a side view of an automatic transmission in accordance with the present invention;
Figure 2 is a partial cross-sectional view on the line II-II of Figure 1;
Figure 3A is a partial cross-sectional view of the solenoid actuator, pin and detent lever of Figure 2;
Figure 3B is a partial cross-sectional view of a modification of the arrangement in Figure 3A;
Figure 4 is a control circuit for the solenoid actuator;
Figure 5 is an alternative control circuit for the solenoid actuator; and
Figure 6 is a cross-sectional view of the solenoid actuator.

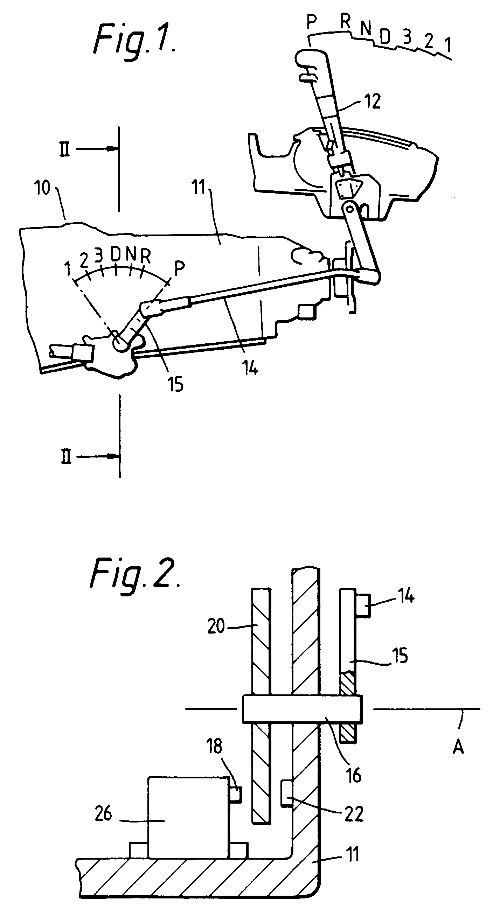

Referring to Figure 1, an automatic transmission 10 for a vehicle in accordance with the present invention comprises a casing 11; a selector lever 12 pivotally mounted on the vehicle and movable by the vehicle operator between positions for selecting park P, reverse drive R, neutral N, and forward drive D, 3, 2, 1 modes (more forward drive modes may be available dependent on the type of automatic transmission) respectively; a selector rod 14; and an intermediate lever 15 pivotally mounted on the casing 11. The intermediate lever 15 is connected to a detent lever 20, (Figure 2) which is positioned inside the casing 11, by a shaft 16. The selector rod 14, intermediate lever 15, shaft 16 and detent lever 20 define selector linkage for the automatic transmission. Pivoting movement of the intermediate lever 15 causes corresponding pivoting movement of the detent lever 20, both of which pivot about an axis A relative to the casing 11. The detent lever 20 is connected to mode selection means (not shown) for operation thereof. As the detent lever 20 is connected to the selector lever 12, the pivotal position of the detent lever relative to the casing 11 is determined by the position of the selector lever. The mode selection means may be a manual valve for hydraulically or pneumatically operated automatic transmissions or a position selection switch means for electrically controlled automatic transmissions. The mode selection means places the automatic transmission in the required mode dependent on the position of the selector lever 12. Other features of the automatic transmission are omitted for clarity, but are well known to those skilled in the art.

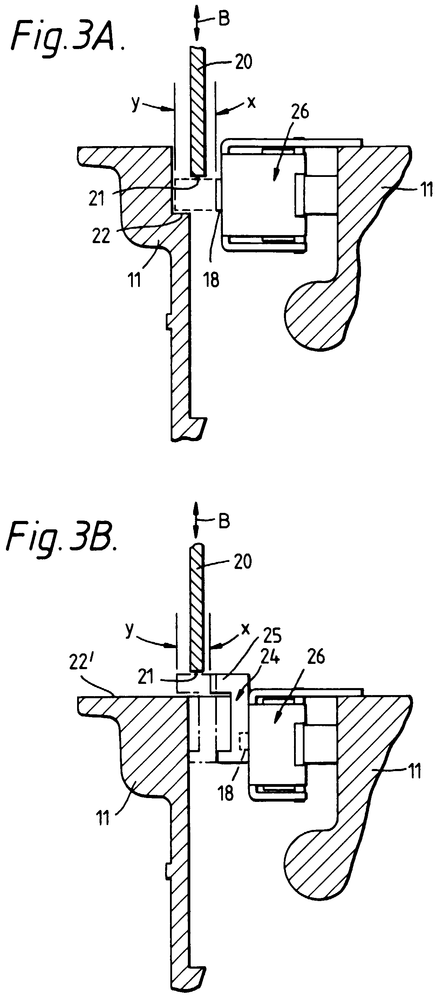

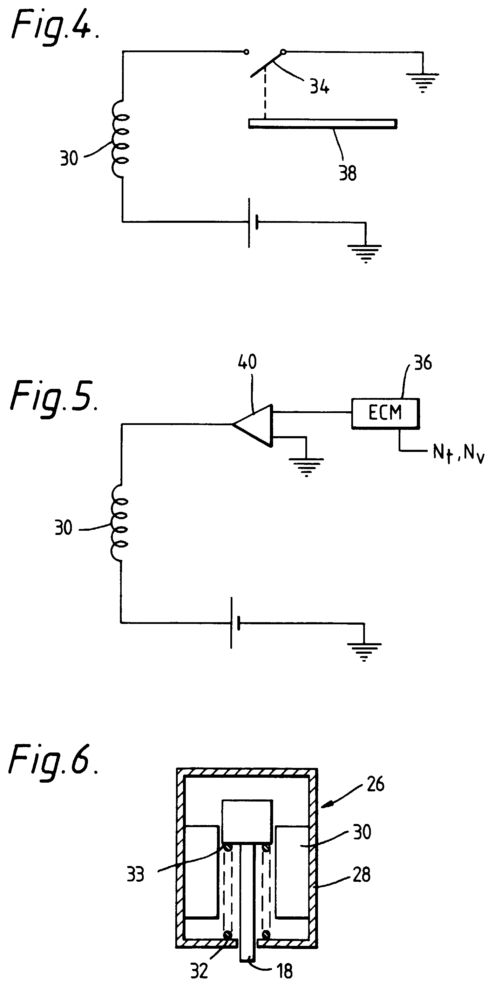

The present invention also includes a solenoid actuator 26 secured to the casing 11 inside the automatic transmission 10 adjacent the detent lever 20 (Figure 2). The solenoid actuator 26 (Figure 6) comprises a housing 28 with an annular coil 30 therein. The housing 28 is secured to an inner wall of the casing 11 adjacent the detent lever 20. A pin 18 extends into the housing 28 and through the annular coil 30. A coil spring 32 surrounds a portion of the pin 18 inside the housing 28, and engages the housing and a shoulder 33 on the pin to bias the pin towards the retracted position. In the rest position, the annular coil 30 is de-activated, and the pin 18 is in a retracted position (x in Figure 3A). Energisation of the annular coil 30 moves the pin 18 to an extended position (y in Figure 3A) against the bias of the coil spring 32. When the pin 18 is in the retracted position, the detent lever 20 is free to pivot about axis A. When the pin 18 is in its extended position the pin can engage the detent lever 20 (on pivoting about axis A, the free end 21 of the detent lever 20 effectively moves in the direction B when viewed in Figure 3A) to restrict the pivoting movement of the detent lever and prevent the selector lever 12 from being moved to the position selecting park or reverse drive mode. In its extended position, the pin 18 preferably engages a shoulder 22 formed on the casing 11 to substantially prevent the vehicle operator forcing the selector lever 12 into the Reverse (R) or Park (P) positions. The annular coil 30 can be energised either by a pressure responsive switch 34 (Figure 4) or by an electronic control module 36 (Figure 5) or by any other suitable means as appropriate. The pressure responsive switch 34 of Figure 4 is actuated by fluid or air pressure in a conduit 38 which is dependent on the transmission output speed, and hence the vehicle speed. The pressure responsive switch 34 is set to close when the vehicle speed is above a predetermined level, for example 5 kilometres per hour (kph), to energise the annular coil 30. In the alternative arrangement of Figure 5, the electronic control module 36, which controls the operation of the automatic transmission, monitors the transmission output speed Nₜ and/or the vehicle speed Nᵥ, and energises the annular coil 30 by way of a differential amplifier 40 when the vehicle speed is above the predetermined level. This arrangement provides a simple and easy solution to preventing the automatic transmission being placed in park or reverse drive mode when the vehicle is travelling in a forward direction at a speed above the predetermined level.

In the alternative arrangement shown in Figure 3B, a substantially U-shaped blocking member 24 is secured to the end of the pin 18. When the pin 18 is extended, the detent lever 20 can engage one 25 of arms of the blocking member 24 to prevent selection of Park (P) or Reverse (R). In this case, said one arm 25 engages a shoulder 22' on the casing 11 in the extended position.

## Claims

1. An automatic transmission (10) for a vehicle comprising a casing (11); a selector lever (12) movable between positions for selecting park, reverse drive, neutral and forward drive modes respectively for the automatic transmission; a selector linkage (14,15,16,20) connected to the selector lever and including a pivotable detent lever (20) mounted on the casing, the pivotal position of the detent lever relative to the casing being determined by the selected position of the selector lever; mode selection means associated with the selector linkage for selecting the required mode of operation of the automatic transmission dependent on the relative pivotal position of the detent lever; and a solenoid actuated blocking means (18) mounted on the casing, the blocking means being retracted when the vehicle is travelling in a forward direction at a speed below a predetermined level, and the blocking means being extended when the vehicle is travelling in the forward direction at a speed which is above the predetermined level to engage the detent lever to prevent the selector lever being moved to the positions for selecting park or reverse drive modes; characterised in that the mode selection means is operated by the detent lever (20); in that the detent lever is mounted inside the casing (11); and in that the blocking means (18) is mounted inside the casing.

2. An automatic transmission as claimed in Claim 1, wherein the solenoid actuated blocking means (18) is moved between the retracted and the extended positions by a solenoid actuator (26) comprising an energisable coil (30), energisation of which is controlled by a pressure responsive switch (34) which is actuable dependent on the vehicle speed.

3. An automatic transmission as claimed in Claim 1, wherein the solenoid actuated blocking means (18) is moved between the retracted and the extended positions by a solenoid actuator (26) comprising an energisable coil (30), energisation of which is controlled by an electronic control module (36) dependent on the vehicle speed.

4. An automatic transmission as claimed in any one of Claims 1 to 4, wherein the blocking means is a pin (18).

5. An automatic transmission as claimed in any one of Claims 1 to 4, wherein the predetermined level is 5 kph.

## Patentansprüche

1. Automatikgetriebe (10) für ein Fahrzeug mit einer Verkleidung (11); einem Auswahleinrichtungshebel (12), der jeweils zwischen Positionen zum Auswählen von Parken-, Rückwärtsantriebs-, Neutral- bzw. Vorwärtsantriebs-Modi für das Automatikgetriebe bewegbar ist; einem Auswahleinrichtungsgestänge (14, 15, 16, 20), das mit dem Auswahleinrichtungshebel verbunden ist und einen schwenkbaren Sperrhebel (20) umfaßt, der an der Verkleidung angebracht ist, wobei die Schwenkposition des Sperrhebels relativ zu der Verkleidung durch die ausgewählte Position des Auswahlseinrichtungshebels bestimmt ist; einem Modusauswahlmittel, das dem Auswahleinrichtungsgestänge zugeordnet ist, um den erforderlichen Betriebsmodus des Automatikgetriebes abhängig von der relativen Schwenkposition des Sperrhebels auszuwählen; und einem solenoidbetätigten Blockiermittel (18), das an der Verkleidung angebracht ist, wobei das Blockiermittel zurückgezogen wird, wenn sich das Fahrzeug in eine Vorwärtsrichtung mit einer Geschwindigkeit unter einem vorbestimmten Pegel bewegt, und das Blockiermittel ausgedehnt wird, wenn das Fahrzeug sich in die Vorwärtsrichtung mit einer Geschwindigkeit bewegt, welche oberhalb des vorbestimmten Pegels liegt, um mit dem Sperrhebel in Eingriff zu gelangen und somit zu verhindern, daß der Auswahleinrichtungshebel in die Positionen zum Auswählen von Parken- oder Rückwärtsantriebs-Modi bewegt wird;
dadurch **gekennzeichnet**,
daß das Modusauswahlmittel durch den Sperrhebel (20) betätigt wird; daß der Sperrhebel in der Verkleidung (11) angebracht ist und daß das Blockiermittel (18) in der Verkleidung angebracht ist.

2. Automatikgetriebe nach Anspruch 1, worin das solenoidbetätigte Blockiermittel (18) zwischen den zurückgezogenen und ausgedehnten Positionen durch einen Solenoid-Aktuator (26) bewegt wird, der eine erregbare Spule (30) umfaßt, deren Erregung durch einen auf Druck ansprechenden Schalter (34) gesteuert wird, welcher abhängig von der Fahrzeuggeschwindigkeit betätigt werden kann.

3. Automatikgetriebe nach Anspruch 1, worin das solenoidbetätigte Blockiermittel (18) zwischen den zurückgezogenen und den ausgedehnten Positionen durch einen Solenoid-Aktuator (26) bewegt wird, der eine erregbare Spule (30) umfaßt, deren Erregung von einem elektronischen Steuermodul (36) abhängig von der Fahrzeuggeschwindigkeit gesteuert wird.

4. Automatikgetriebe nach einem der Ansprüche 1 bis 4, worin das Blockiermittel ein Stift (18) ist.

5. Automatikgetriebe nach einem der Ansprüche 1 bis 4, worin der vorbestimmte Pegel 5 kph beträgt.

## Revendications

1. Boîte de vitesses automatique (10) pour un véhicule comprenant un carter (11); un levier de sélection (12) pouvant être déplacé entre des positions pour sélectionner respectivement des modes stationnement, marche arrière, point mort et marche avant, pour la boîte de vitesses automatique; une timonerie de sélection (14, 15, 16, 20) reliée au levier de sélection et incluant un levier de détente (20) pivotant monté sur le carter, la position de pivotement du levier de détente par rapport au carter étant déterminée par la position sélectionnée par le levier de sélection; des moyens de sélection de mode associés à la timonerie de sélection pour sélectionner le mode voulu de fonctionnement de la boîte de vitesses automatique en fonction de la position relative de pivotement du levier de détente; et un dispositif de blocage (18) actionné par solénoïde monté sur le carter, le dispositif de blocage étant rétracté lorsque le véhicule se déplace en marche avant à une vitesse inférieure à un niveau prédéterminé, et le dispositif de blocage étant en extension lorsque le véhicule se déplace en marche avant à une vitesse qui est supérieure au niveau prédéterminé, pour coopérer avec le levier de détente afin d'empêcher que le levier de sélection ne soit déplacé vers les positions pour sélectionner les modes stationnement ou marche arrière; caractérisée en ce que les moyens de sélection de mode sont actionnés par le levier de détente (20); en ce que le levier de détente est monté à l'intérieur du carter (11); et en ce que le dispositif de blocage (18) est monté à l'intérieur du carter.

2. Boîte de vitesses automatique selon la revendication 1, dans laquelle le dispositif de blocage (18) actionné par solénoïde est déplacé entre les positions rétractée et étendue par un élément d'actionnement à solénoïde (26) comprenant une bobine (30) pouvant être excitée, dont l'excitation est commandée par un commutateur sensible à la pression (34) qui peut être actionné en fonction de la vitesse du véhicule.

3. Boîte de vitesses automatique selon la revendication 1, dans laquelle le dispositif de blocage (18) actionné par solénoïde est déplacé entre les positions rétractée et étendue par un élément d'actionnement à solénoïde (26) comprenant une bobine (30) pouvant être excitée, dont l'excitation est commandée par un module de commande électronique (36) en fonction de la vitesse du véhicule.

4. Boîte de vitesses automatique selon l'une quelconque des revendications 1 à 4, dans laquelle le dispositif de blocage est une tige (18).

5. Boîte de vitesse automatique selon l'une quelconque des revendications 1 à 4, dans laquelle le niveau prédéterminé est 5 Km/h.
